# EUROPEAN PATENT SPECIFICATION

(11) **EP 2 652 849 B1**
(45) Date of publication and mention of the grant of the patent: **16.03.2016**
(21) Application number: 11811132.7
(22) Date of filing: 21.10.2011
(51) Int. Cl.: H02B 1/01

(54) **A THREE DIMENSIONAL STRUCTURE**
EINE DREIDIMENSIONALE STRUKTUR
STRUCTURE TRIDIMENSIONNELLE

(30) Priority: 21.10.2010 AU 2010904694
(43) Date of publication of application: 23.10.2013
(73) Proprietor: Elsteel Denmark A/S, 3000 Helsingør (DK)
(72) Inventor: LOGSTRUP, Erik, Katunayake 11420 (LK)
(86) International application number: PCT/IB2011/054711
(87) International publication number: WO 2012/052969

(56) References cited:
- WO-A1-86/03265
- WO-A1-94/14307
- GB-A- 1 512 899

## Description

### THE TECHNICAL FIELD

The present invention relates to a module based three dimensional structure used in the production of electrical enclosures for housing and operating of medium voltage equipment and associated apparatus.

### The Background Art

There have been in existence many three dimensional structures which have been used over a period or time to house electrical equipment of various voltage levels. These have been commonly been made by attaching metal bars of various lengths and sizes together by screwing or other means to create three dimensional structures.

The above designs have had many limitations and have posed many difficulties when it comes to mounting equipment and also come with strength issues. All developments made have focused on strength, screwing methods and assembling options but very few.have attempted to address the issue of mounting options and ease. The best model to be used to overcome these problems is given by the design published under EP0729696.

Even the best models do not accommodate equipment which belongs to two different voltage levels and also do not provide for a large range of mounting options therefore it is required to use two different enclosures to house the equipment wherever the need arises.

### THE DISCLOSURE OF THE INVENTION

The newly proposed design overcomes all existing problems and provides a more novel way of housing electrical equipment where it provides for extreme flexibility and range when it comes to the mounting of equipment and also provides the opportunity to house equipment of various voltage levels within the same enclosure without any modification.

The innovation will consist of corner blocks, corner bars, crossbars, and sub crossbars attached in a specific manner to create the specified structure, as defined in claim 1. Each corner block will engage with three corner bars which will be 90 degrees apart from each other once fastened using the circular connection anchors and thereby the development of a three dimensional structure will happen. This build can be extended and strengthened by using connecting blocks in any direction to create a strong and rigid frame for an enclosure and cross bars and sub cross bars which will help increase the range of mounting and thereby allow the mounting of equipment which belong to various levels of voltage with ease and precision.

### INTRODUCTION TO DRAWINGS

An example of the invention will be described by referring to the accompanying drawings:

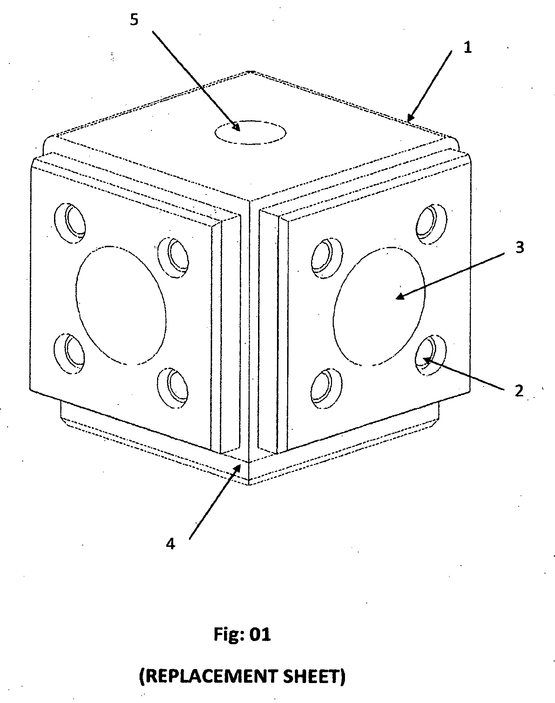

FIG.1. A perspective view of the corner block.

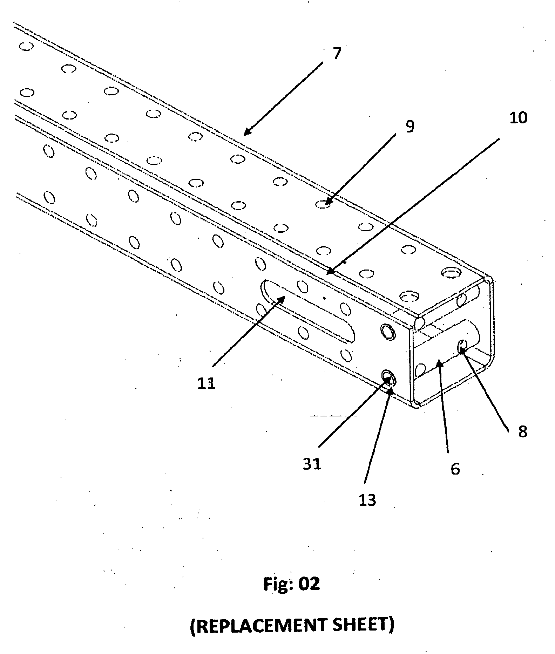

FIG.2. A perspective view of the corner bar.

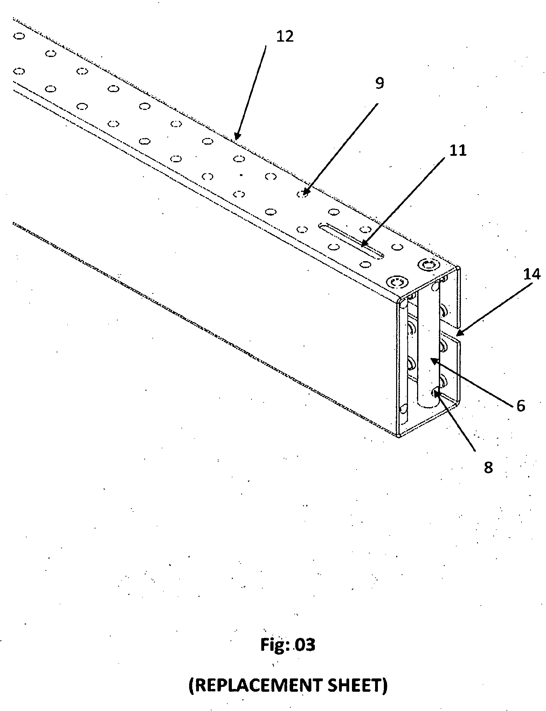

FIG.3. A perspective view of the cross bar.

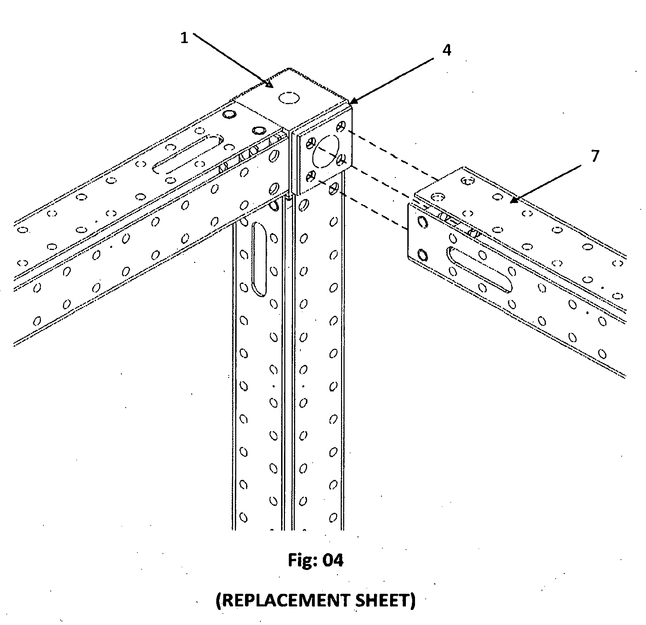

FIG.4. Illustrates the connection between a corner block and a corner bar and the three dimensional structure.

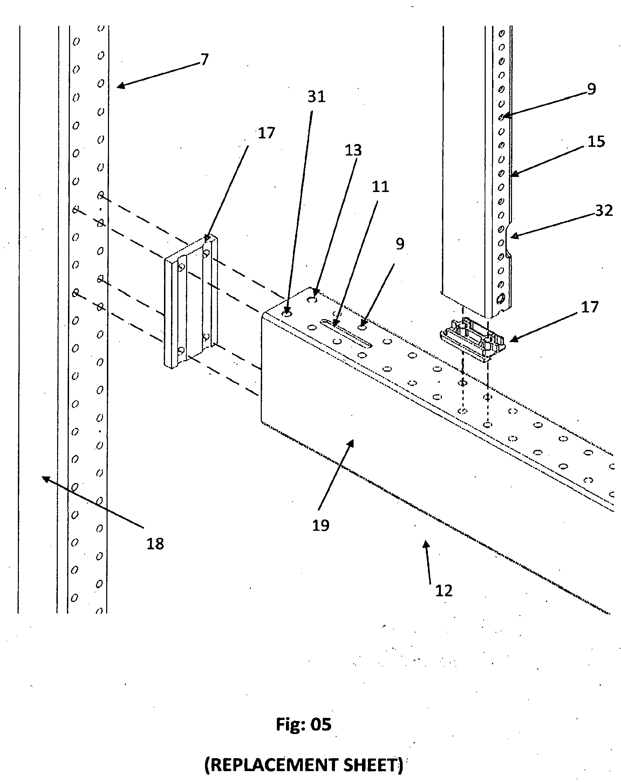

FIG.5. Illustrates the way cross bars and sub cross bars are connected to the each other and the corner bar.

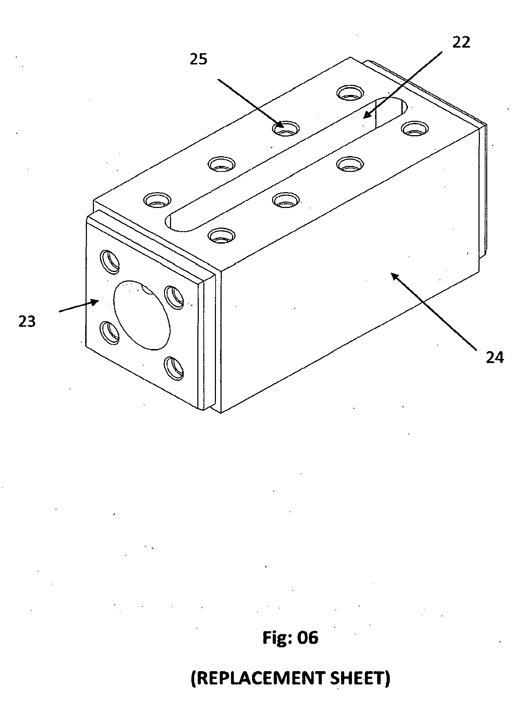

FIG.6. A perspective view of the extension block.

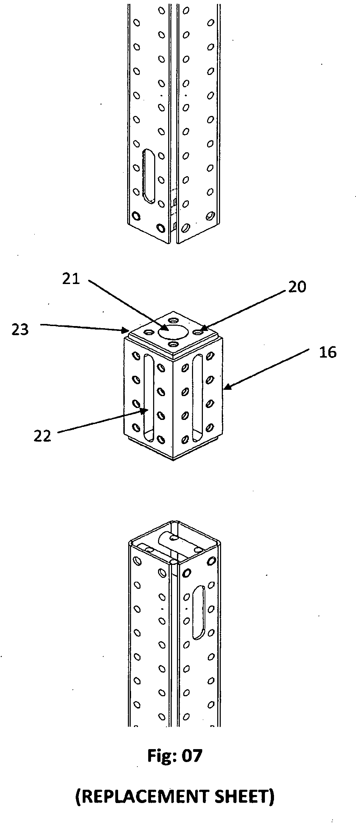

FIG.7. Illustrates the connection between a corner bar and extension block.

In the drawings each essential component and connection is illustrated for comprehending purposes.

The corner block (1) (Refer Fig-1) is a solid structure in the shape of a cube having three sides with bulges (4), two plane sides with no bulging and one plane side with no bulging but one centrally drilled tapped hole (5). Each bulge which is square shaped, slightly smaller than the surface they are situated on and capable of being inverted into the cross section of the corner bars (7) is situated directly opposite a plane side which may or may not contain a central tapped hol6 (5). Each bulge (4) contains four tapped holes (2), one situated in each corner of the square bulge equidistant from the edges of the outermost square surface of the bulge converging to form a corner of the above mentioned surface. Each bulge (4) also contains an untapped hole (3) with its center at the intersection point of the square face's diagonals and drilled in deep enough to form a connecting passage within the solid cubic block with the similarly drilled holes on the other two bulging faces and the hole on the plane side. These holes (3) are created to make the overall structure lighter as well as to make the formulating of the corner block (1) easier and cost effective.

The corner bar (7) (Refer Fig-2) is made by bending a sheet of metal three times to form a hollow bar with a square cross section, three solid edges and one unconnected edge (10) running the whole length of the bar parallel to the longitudinal axis of the bar and is used to form the outer frame of the three dimensional structure. At least two sides of the bar contain arrays of holes (9) where each side has two parallel lines of holes (9) with the holes arranged equal distances apart running the length of the bar parallel to the longitudinal axis of the bar (7). A line of holes (9) is situated 'm' distance away from an edge of the particular side under consideration.

Each holed side is placed direct opposite to that of a side which does not contain holes. The arrays of fitting holes (9) are arranged in such a way that it will increase the amount of mounting options. It also contains circular connection anchors (6) and access cut-outs (11). A pair of circular connection anchors (6), which have transverse (8) and axial holes (31), are fixed at either ends of the corner bar, where at these points the corner bar (7) is connected to the corner block (1) by screwing through the transverse holes (8) of the circular connection anchors (6). These connection anchors (6) provide for a more rigid connection of the corner bar (7) with the corner block (1). The access cut-outs (11) are placed on the ends of the sides adjacent to the side without the holes of the corner bar in a manner where convenient access to the circular connection anchors (6) is available.

The cross bar (12) (Refer Fig-3) is made by bending a sheet of metal four times to form a hollow bar with a rectangular cross section, four solid edges and a split (14) running the whole length of the bar parallel to the longitudinal axis of the bar on one of the sides which forms longer sides of the rectangular cross section and is used to form the different levels of the three dimensional structure. All sides apart from the side which is directly opposite to the split side contain arrays of holes (9). The sides which form the shorter sides of the rectangular cross section has two straight lines of holes situated in the exact same manner on a holed side of a corner bar while the split side contains four lines of holes two on each side of the split In the exact same way mention for a holed side of a corner bar (7). The arrays of fitting holes (9) are arranged in such a way that it will increase the amount of mounting options. It also contains circular connection anchors (6) and access cut-outs (11). A pair of circular connection anchors (6), which have transverse (8) and axial holes (31), are fixed at either ends of the cross bar (12), where at these points the cross bar (12) is connected to the corner bar (7) by screwing through the transverse holes (8) of the circular connection anchors (6). These connection anchors (6) provide for a more rigid connection of the cross bar (12) with the corner bar (7). The access cut-outs (11) are placed on the end of the sides which form the shorter sides of the rectangular cross section of the cross bar (12) in a manner where convenient access to the circular connection anchors (6) is available.

The sub cross bar (15) (Refer Fig-5) is made by bending a sheet of metal four times to form a hollow bar with a rectangular cross section, four solid edges and a split running the whole length of the bar parallel to the longitudinal axis of the bar on one of the sides which forms longer sides of the rectangular cross section just like a cross bar (12) but contains dimensions which are half the size of it and only contains a single line of holes in place of the two the cross bar (12) would have had in an identical position. These sub cross bars (15) can be used to facilitate the mounting of smaller equipment and may even be used to add rigidity to the structure and used as strengthening bead throughout the structure. A sub cross bar (15) has at least one circular connection anchor (6) each on either of its ends. The access cut-outs (32) are placed on the end of edges of the sub cross bar (15) unlike in the main cross bar (12). This sub cross bar (15) too is connected to the corner bars (7) or other perpendicular main cross bars (12) by screwing through the transverse holes (8) of the circular connection anchor (6).

The extension block (16) (Refer Fig -6) is a rectangular shaped solid block of metal which has been drilled, cut and machined to form a connector which can connect two corner bars (7) together to get an extended edge for the complete three dimensional structures according to the necessity and availability of the above mentioned corner bars (7). The extension block (16) has two bulges similar to the ones present in the corner block (1) but only on the two square sides of the rectangular block to facilitate the extension where each bulge (23) has four tapped holes (20), one situated in each corner of the square bulge equidistant from the edges of the outermost square surface of the bulge (23) converging to form a corner of the above mentioned surface. Each extension block (16) has two consecutive plane rectangular sides while the other two sides have an access hole cut (22) into each of them and eight holes (25) in two rows one row on either side of the cut (22) and equidistant from the long edges of the side under consideration. A centrally drilled hole (21) runs the length of the block with its axis parallel to that of the longitudinal axis of the block (16) and connects with the two cuts (22) described above to create an open cavity with four openings with two of them circular and centrally situated on the bulges with their centers coinciding with the longitudinal axis of the block (16).

The corner block (1) has three bulging sides (4) which have connecting holes (2) where the corner bars (7) can be connected (Refer Fig-4) and screwed to form the three dimensional structure and this setup will form the top and bottom corners of the entire structure. Here the corner bar (7) can be connected to corner block (1) by screws inserted through transverse holes (8) of circular connection anchors (6) in the corner bar (7) and tightened into tapped holes (2) on the bulges (4) of the corner blocks (1) with a tool/screw driver inserted through access cut outs (11) on the bodies of the cross bars.

Similarly the corner bars (7) can be attached to the extension blocks (16) at both ends if the need arises to extend the height, width or depth of the three dimensional structure to suit both the technical as well as economic needs of the user.

The cross bars (12) and the sub cross bars (15) are attached (Refer Fig-5) to the corner bars (7) mainly to add depth and strength as well as increase the mounting options and accommodate both light duty and heavy duty equipment according to their voltage levels respectively.

### INDUSTRIAL APPLICABILITY

The objective of the invention is to provide a three dimensional structure which uses simple assembly methods and strength to house medium voltage equipment as well as low voltage equipment within the same framework and also provide a large and flexible range of mounting.

## Claims

1. A three dimensional structure adapted for housing and operation of low and medium voltage equipment, comprising:
a. corner bars (7) which have hollow square cross section with a small longitudinal split (10) and two circular connection anchors (6) placed inside at each end to facilitate fixing the corner bar to a corner block (1);
b. corner block (1) connected to three corner bars (7) having three bulging sides to which corner bars (7) are inserted and fixed by screws inserted through transverse.holes (8) of the circular connection anchors (6) in the corner bars (7);
c. circular connection anchors (6) which reside inside at both ends of cross bars (7) and sub cross bars (15) and have transverse holes (8) and axial holes (31) of which the former are used to fix either ends of the corner bar (7) or sub cross bar (15) to a corner block (1) or extension block (16) respectively;
d. cross bars (12) which have hollow rectangular cross section with a small longitudinal split (14) and two circular connection anchors (6) at each end to facilitate fixing the cross bar (12) to a corner bar (7), another cross bar (12), sub cross bar (15) or extension block (16);
e. sub cross bars (15) which have a hollow rectangular cross section with a small longitudinal split and a circular connection anchor (6) at each end to facilitate fixing a sub cross bar (15) to a corner bar (7), a cross bar (12), another sub.cross bar (15) or extension block (16);
f. extension blocks (16) which have two square bulging sides (23) to which corner.bars (7) can be inserted and fixed to by screwing through transverse holes (8) of the circular connection anchors (6) of the corner bars (7) and
g. thin plastic inserts (17) placed in between when connecting either cross bars (12) or sub cross bars (15) to either corner bars (7) or extension blocks (16) and fixed by means of four screws for each connection made by a cross bar (12) and by means of two screws for each connection made by a sub cross bar (15)
all connected in such a manner to realize a frame structure extensible in terms of width, height or depth using extension blocks (16).

2. A three dimensional structure in accordance with claim 1 **characterized in that** it comprises plurality of corner blocks (1) of which a corner block (1) is a cubic solid piece of steel with edge length M which has been cut and machined to have three sides with bulges (4), two plane sides with no bulging and one plane side with no bulging but one centrally drilled tapped hole (5) which will always be facing upwards or downwards depending on the location of attachment.

3. A three dimensional structure in accordance with claim 2 **characterized in that** it comprises corner blocks (1) with bulges (4) where each bulge (4) is square shaped, slightly smaller than the surface on which it is protruding from and capable of being inserted into the cross section of a corner bar (7) and is situated directly opposite a plane side which may or may not contain a central tapped hole (5) and each bulge contains four tapped holes (2), one situated in each corner of the square surface of the bulge (4) with each hole's center a distance 'm' from the edges of the main block's square surface converging to form a corner of the block on which the protruding bulge (4) lies.

4. A three dimensional structure in accordance with claims 2 and 3 **characterized in that** each bulge (4) on a corner block (1) also contains an untapped free hole (3) with its center at the intersection point of the square face's diagonals with a diameter not large enough to touch the circumference of any of the four tapped holes (2) on the bulge (4) and drilled in deep enough to form a hollow connecting passage within the solid cubic block with the similarly drilled holes on the other two bulging faces and the tapped hole (5) on the plane side.

5. A three dimensional structure in accordance with claim 1 **characterized in that** it comprises of an extension block (16) which is a solid square cuboid of metal which has been drilled, cut and machined to form a connector which can connect two corner bars (7) together to get an extended edge for complete three dimensional structures and comprises of two square surfaces with bulges (23) with holes on them and two consecutive plane rectangular sides (24) and the other two rectangular surfaces have holes (25) and access cutouts (22) where these holed rectangular surfaces are situated directly opposite the two plane rectangular surfaces.

6. A three dimensional structure in accordance with claim 5 **characterized in that** the extension block (16) has two square bulges (23) only on the two square sides of the block (16) smaller than the surface it is protruding from and able to fit in to the hollow cross section of a corner bar (7) to facilitate the extension where each bulge has four tapped holes, one situated in each corner of the square surface of the square bulge (23) with each hole's center at a distance m from the edges of the solid block which converge to form the surface from which the bulge protrudes.

7. A three dimensional structure in accordance with claim 6 **characterized in that** it has an extension block (16) that has two consecutive sides which have an access hole (22) cut into each of them and eight holes (25) on each one of those rectangular sides, and situated in two equally divided rows one row on either side of the access cut out with the line connecting the centers of the holes on one particular row lying parallel to the longitudinal axis of the block and at a distance 'm' from the edge of the block and a centrally drilled hole runs the length of the block with its axis parallel to that of the longitudinal axis of the block and coinciding with the centers of the square surfaces of the block and this connects with the two access cut outs to create a hollow cavity with four openings out of which two of them are circular and centrally situated on the bulges with their centers coinciding with the longitudinal axis of the block.

8. A three dimensional structure in accordance with claims 3 and 6 **characterized in that** the corner bars (7) form the outer frame of the mentioned structure where the bars made by bending steel plates has two sides with arrays of tapped holes (9) situated on them and two plane sides which always face the exterior of the structure and one of those plane sides and one of the two holed sides contain two strategically placed access cut outs (11) at each end of the corner bars (7).

9. A three dimensional structure in accordance with claim 8 **characterized in that** it has a corner bar (7) which has arrays of tapped holes (9) situated in two straight lines per surface on two adjacent surfaces with the lines connecting the centers of the tapped holes in each straight line lying parallel to the longitudinal axis of the hollow bar (7) and each line of tapped holes situated a distance 'm' from the longitudinal edges of the rectangular side it is situated on, and the sides containing the arrays of tapped holes will lie on both sides of the unconnected edge (10) running the length of the corner bar (7) while the other two plane sides lie directly opposite the two holed sides.

10. A three dimensional structure in accordance with claim 9 **characterized in that** the corner bar (7) comprises a total of four access cut outs (11) where two access cut outs each are placed on two opposing sides of the corner bar (7) at each end of the corner bar where the access cut outs (11) are situated on the surfaces to which the circular connection anchors (6) are fastened and situated slightly below or above the horizontal straight line which connects the centers of two circular rivets (13) which hold a pair of the circular connection anchors (6) on one end of the corker bar (7) rigidly in place.

11. A three dimensional structure in accordance with claim 1 **characterized in that** it comprises cross bars (12) which form the depth and add mounting space and options within the structure are made by bending a steel plate to form a hollow metal structure with a rectangular cross section with a split (14) on one of the longer sides of the rectangular cross section running the length of the cross bar (12) while three out of the four sides of the cross bar (12) have arrays of tapped holes (9) and the two sides which form the two shorter sides of the cross section have strategically placed access cut outs (11) at each end while the plane rectangular side which does not contain access cut outs (11) and a split (14) will always face the exterior of the structure.

12. A three dimensional structure in accordance with claim 11 **characterized in that** it has a cross bar (12) comprising arrays of tapped holes (9) situated in straight lines and the sides which contain the shorter side of the rectangular cross section have two rows of holes (9) while the third side has four rows with two rows of holes situated on either side of the center split (14) on that side and every straight line which connects the centers of holes in a given row which runs the length of the bar lies parallel to the longitudinal axis of the cross bar and a distance 'm' from the closest edge of any side of the cross bar (12) except for the lines situated closest to the split (14) which lie a distance 'm' from the centerline of the split (14) or gap which runs parallel to the longitudinal axis of the cross bar (12).

13. A three dimensional structure in accordance with claim 12 **characterized in that** each cross bar (12) comprises a total of four access cut outs (11) where two access cut outs (11) each are placed on two opposing sides of the cross bar (12) at each end of the cross bars (12) where the access cut outs (11) are situated on the surfaces to which the circular connection anchors (6) are fastened where in this case will be the two shorter sides of the rectangular cross section and situated slightly below or above the horizontal straight line which connects the centers of two circular rivets (13) which hold a pair of the circular connection anchors (6) on one end of the cross bar rigidly in place and the words above and below relatively depend upon the end and side of the corner bar under consideration.

14. A three dimensional structure in accordance with any of the preceding claims wherein modular dimension M or m is mentioned **characterized in that** they are defined to be M=4*m, wherein the modular dimension M is 50mm and the modular dimension m is 12.5mm.

15. Use of the frame construction in accordance with any of the claims 1-13 for building enclosures for the purpose of housing electrical equipment for low and medium voltage operations.

## Patentansprüche

1. Eine dreidimensionale Struktur angepasst für den Wohnungsbau und den Betrieb von Nieder- und Mittelspannungsanlagen, mit:
a. Ecke Bars (7), die hohl quadratischen Querschnitt mit einer kleinen Längsspalt (10) und zwei kreisförmige Verbindungsankern haben (6) im Inneren an jedem Ende angeordnet, um zu erleichtern, die Festsetzung der Eckkneipe in eine Ecke Block (1);
b. Eckblock (1) bis drei Eckenstangen (7) mit drei gewölbten Seiten, zu denen Eckstangen (7) durch Schrauben, die durch Querlöcher eingeführt und befestigt (8) der kreisförmigen Verbindungs Verankerungen (6) in den Eckenstangen (7);
c. Kreisanschluss Anker (6), die im Inneren an beiden Enden der Querträger (7) und Teilquerstangen (15) befinden, und haben Querbohrungen (8) und axialen Bohrungen (31), von denen die erstere verwendet werden, um entweder Enden der fix Bar-Ecke (7) oder Teilquerstange (15) in eine Ecke Block (1) oder den Erweiterungsblock (16) sind;
d. Querträger (12), die hohlen rechteckigen Querschnitt mit einem kleinen Längsspalt (14) und zwei kreisförmige Verbindungsankern aufweisen (6) an jedem Ende zur Erleichterung der Befestigung der Querstange (12) an einer Ecke Stange (7), eine weitere Querstange (12), Teilquerstange (15) oder den Erweiterungsblock (16);
e. Teilquerstangen (15), der einen hohlen rechteckigen Querschnitt mit einem kleinen Längsspalt und einem kreisförmigen Verbundanker aufweisen (6) an jedem Ende zur Erleichterung der Fixierung eines Teilquerstange (15) an einer Ecke Stange (7), einer Querstange (12), eine weitere Teilquerstange (15) oder den Erweiterungsblock (16);
f. Erweiterungsblöcke (16), der zwei quadratische Wölbung Seiten (23), an dem Eckenleisten (7) eingesetzt und durch Verschrauben durch Querlöcher befestigt werden müssen (8) der kreisförmigen Verbindungsankern (6) der Eckenleisten (7) und
g. dünne Kunststoffeinsätze (17) angeordnet zwischen Beim Anschluss Querstangen (12) oder Teilquerstangen (15) entweder Eckenstangen (7) oder Erweiterungsblöcke (16) und mit Hilfe von vier Schrauben an jeder Verbindung durch einen aus fixen Querstange (12) und mit Hilfe von zwei Schrauben an jeder Verbindung durch einen Teilquerstahl (15)
alle in einer solchen Weise verbunden, um eine Rahmenstruktur erweiterbares hinsichtlich Breite, Höhe oder Tiefe mit Erweiterungsblöcke (16) zu realisieren.

2. Eine dreidimensionale Struktur gemäß Anspruch 1, **dadurch gekennzeichnet, dass** es mehrere Eckelemente (1), dessen eine Ecke Block (1) eine kubische massives Stahlstück ist mit einer Kantenlänge M, die geschnitten und bearbeitet, um drei Seiten haben, ist, umfaßt mit Ausbuchtungen (4), zwei ebenen Seiten ohne Ausbeulen und einer Ebene Seite ohne Ausbeulen aber einer zentral gebohrten Gewindeloch (5), die stets mit Blick wird nach oben oder unten in Abhängigkeit von der Lage der Anlage.

3. Einer dreidimensionalen Struktur nach Anspruch 2, **dadurch gekennzeichnet, daß** sie umfaßt Eckblöcke (1) mit Ausbuchtungen (4) wobei jeder Wulst (4) quadratisch geformt, der geringfügig kleiner ist als die Fläche, auf der sie vorsteht und geeignet ist, einge in den Querschnitt einer Bar-Ecke (7) und liegt direkt gegenüber einer Ebene Seite, die gegebenenfalls eine zentrale Gewindebohrung (5) enthalten kann, entfernt und jede Ausbuchtung enthält vier Gewindebohrungen (2), eine in jeder Ecke der Lage quadratische Fläche der Ausbuchtung (4) mit dem jeweils Lochmitte ein Abstand "m" von den Rändern der Flächeninhalt der Hauptblock des konvergierenden, um eine Ecke des Blocks, auf dem die hervorstehenden Wulst (4) liegt, zu bilden.

4. Eine dreidimensionale Struktur nach den Ansprüchen 2 und 3, **dadurch gekennzeichnet, dass** jeder Wulst (4) an einer Ecke Block (1) enthält auch eine ungenutzte freie Loch (3) mit seinem Zentrum im Schnittpunkt der Diagonalen der quadratischen Gesicht mit einem Durchmesser nicht groß genug, um den Umfang von jeder der vier Gewindelöcher (2) auf dem Wulst (4) und in tief genug gebohrt berühren, um eine hohle Verbindungsdurchgang innerhalb des festen kubischen Block mit den ebenfalls Bohrungen an den anderen beiden gewölbten Flächen bilden und die Gewindebohrung (5) auf der ebenen Seite.

5. Einer dreidimensionalen Struktur nach Anspruch 1, **dadurch gekennzeichnet, dass** es aus einem Erweiterungsblock (16), die eine feste Rechteckquader aus Metall, das gebohrt worden ist, geschnitten und bearbeitet, um einen Verbinder, der zwei Winkelstangen verbinden zu bilden (7) aufweist zusammen, um einen erweiterten Rand für eine vollständige dreidimensionale Strukturen zu erhalten und besteht aus zwei quadratischen Flächen mit Ausbuchtungen (23) mit Löchern darauf und zwei aufeinanderfolgenden ebenen Rechteckseiten (24) und die beiden anderen rechtwinkligen Flächen haben Löcher (25) und Zugang Ausschnitte (22), wo diese verschanzt rechteckigen Flächen direkt gegenüber den zwei ebenen rechteckigen Flächen entfernt.

6. Einer dreidimensionalen Struktur nach Anspruch 5, **dadurch gekennzeichnet, dass** der Erweiterungsblock (16) zwei Quadrat Ausbuchtungen (23) nur an den beiden quadratischen Seiten des Blocks (16) kleiner ist als die Oberfläche, die sie von der und in der Lage zu passen vorspringenden an der Hohlquerschnitt einer Bar-Ecke (7), um die Erweiterung, wobei jede Ausbuchtung hat vier Gewindebohrungen, eine in jeder Ecke des Platzes Oberfläche des Platzes Ausbuchtung (23) mit jeder Lochmitte in einem Abstand m von der Lage zu erleichtern Kanten des festen Blocks, die konvergieren, um die Fläche, aus der der Wulst vorsteht bilden.

7. Einer dreidimensionalen Struktur nach Anspruch 6, **dadurch gekennzeichnet, daß** sie einen Erweiterungsblock (16), zwei in jeder von ihnen geschnitten aufeinanderfolgende Seiten aufweist, die ein Zugangsloch (22) und acht Bohrungen (25) auf jedem dieser rechteckigen hat, hat Seiten und auf zwei gleich große Reihen gelegen einer Reihe auf jeder Seite des Zugangsschnitten mit der Verbindungslinie zwischen den Mittelpunkten der Löcher auf einer bestimmten Reihe liegend parallel zur Längsachse des Blocks und in einem Abstand "m" aus dem Rand des Blocks und einem zentral Bohrung läuft über die Länge des Blocks der mit seiner Achse parallel zu der Längsachse des Blocks und übereinstimmend mit den Zentren der Rechteckflächen des Blocks mit beiden Zugangsausschnitte auf diese verbindet erzeugen einen Hohlraum mit vier Öffnungen, von denen zwei von ihnen sind kreisförmig und mittig auf den Ausbuchtungen mit ihren Zentren übereinstimmend mit der Längsachse des Blocks liegt.

8. Eine dreidimensionale Struktur in Übereinstimmung mit den Ansprüchen 3 und 6 **dadurch gekennzeichnet, dass** die Eckenleisten (7) den äußeren Rahmen der genannten Struktur, wobei die Stäbe durch Biegen von Stahlplatten hergestellt hat zwei Seiten mit Reihen von Gewindebohrungen (9), die auf ihnen befindlichen und zwei ebene Seiten aufweist, die immer die Außenseite der Struktur und eine dieser ebenen Seiten und einer der beiden Seiten nach durchlöchert enthalten zwei strategisch platziert Zugangsausschnitte (11) an jedem Ende der Eckstangen (7).

9. Einer dreidimensionalen Struktur nach Anspruch 8, **dadurch gekennzeichnet, daß** er eine Ecke Stange (7), welche Anordnungen von Gewindebohrungen (9) in zwei geraden Linien pro Fläche auf zwei benachbarten Flächen mit den Linien, die die Mitten der Gewindelöcher angeordnet ist in jeder geraden Linie parallel zur Längsachse des Hohlstabs (7) und jeder Zeile der Gewindelöcher von den Längsrändern der rechteckigen Seite ist es auf entfernt gelegene einen Abstand "m", und an den Seiten, die die Anordnungen von Gewinde liegenden Bohrungen werden auf beiden Seiten des nicht verbundenen Rand (10), die entlang der Länge des Bar-Ecke (7), während die anderen beiden Planseiten liegen direkt gegenüber den beiden verschanzt Seiten liegen.

10. Eine dreidimensionale Struktur nach Anspruch 9, **dadurch gekennzeichnet, dass** die Bar-Ecke (7) besteht aus insgesamt vier Zugriffs Ausschnitte (11), in der zwei Zugriffs Aussparungen jeweils an zwei gegenüberliegenden Seiten des Bar-Ecke (7) an jedem platziert Ende des Bar-Ecke, wo die Zugangs Ausschnitte (11) sind an den, dem die kreisförmige Verbindungs Anker (6) befestigt sind und leicht unter oder über der horizontalen geraden Linie, die die Zentren der zwei kreisförmige Nieten miteinander verbindet Flächen gelegen (13) die ein Paar von den kreisförmigen Verbindungs Anker (6) an einem Ende des Bar-Ecke (7) fest in Position zu halten.

11. Einer dreidimensionalen Struktur nach Anspruch 1, **dadurch gekennzeichnet, daß** sie Querstangen (12) aufweist, die die Tiefe zu bilden, und fügen Einbauraum und Optionen innerhalb der Struktur durch Biegen einer Stahlplatte, um eine hohle Metallstruktur mit einem rechteckigen Querschnitt bilden, werden hergestellt mit einem Split (14) an einer der längeren Seiten des rechteckigen Querschnitts entlang der Länge der Querstange (12), während drei der vier Seiten des Querträgers (12) Reihen von Gewindebohrungen (9) und die beiden Seiten, die die beiden kürzeren Seiten des Querschnitts zu bilden haben strategisch platzierten Zugang Ausschnitte (11) an jedem Ende, während das Flugzeug Rechteckseite, die nicht Zugang Ausschnitte enthält (11) und ein Split (14) wird immer das Gesicht des Äußere der Struktur.

12. Einer dreidimensionalen Struktur nach Anspruch 11, **dadurch gekennzeichnet, daß** es eine Querstange (12) mit Reihen von Gewindebohrungen (9) in geraden Linien und den Seiten, die die kürzere Seite des rechteckigen Querschnitts enthalten gelegen haben zwei Reihen von Löchern (9), während die dritte Seite hat vier Reihen mit zwei Reihen von Löchern auf jeder Seite der Mitte gespalten (14) auf der Seite und jeder geraden Linie, die die Zentren von Löchern in einer bestimmten Reihe miteinander verbindet, die die Länge der Stange verläuft liegt parallel zur Längsachse des Querträgers und ein Abstand "m" von der nächsten Kante jeder Seite der Querstange (12) bis auf die am nächsten liegende der Spaltung (14), die einen Abstand "m" aus liegen Linien die Mittellinie der geteilten (14) oder Spalt, der parallel zur Längsachse der Querstange (12) verläuft.

13. Eine dreidimensionale Struktur nach Anspruch 12, **dadurch gekennzeichnet, daß** jeder Querstange (12) besteht aus insgesamt vier Zugriffs Ausschnitte (11), in der zwei Zugriffs Ausschnitte (11) jeweils auf zwei gegenüberliegenden Seiten der Querstange platziert (12) an jedem Ende der Querstäbe (12), wobei die Zugangsausschnitte (11) auf den Oberflächen befindet, an den die kreisförmigen Anschlussanker (6), wo in diesem Fall befestigt werden die beiden kürzeren Seiten des rechteckigen Querschnitt aufweisen und liegt knapp unter oder über der horizontalen geraden Linie, die die Zentren der zwei kreisförmige Nieten (13), die ein Paar der kreisförmigen Verbindungs Anker (6) an einem Ende der Querstange fest in Position zu halten, und die Worte, die oben und unten relativ verbindet hängen von dem Ende und Seite der Ecke bar geprüft.

14. Eine dreidimensionale Struktur in Übereinstimmung mit einem der vorhergehenden Ansprüche, wobei Maßrasters M oder m erwähnt wird **dadurch gekennzeichnet, dass** sie definiert sind, um M = 4 * m ist, wobei das Rastermaß M beträgt 50 mm und das Rastermaß m 12.5mm.

15. Die Nutzung der Rahmenkonstruktion in Übereinstimmung mit einem der Ansprüche 1-13 für den Aufbau-Gehäuse für den Zweck der Gehäuse elektrische Geräte für den Nieder- und Mittelspannungsvorgänge.

## Revendications

1. Une structure tridimensionnelle adaptée pour le logement et l'exploitation des équipements de basse et moyenne tension, comprenant:
a. barres de coin (7) qui ont section carrée creuse avec une petite fente longitudinale (10) et deux ancres de connexion circulaires (6) placé à l'intérieur à chaque extrémité pour faciliter la fixation de la barre de coin à un bloc de coin (1);
b. bloc d'angle (1) relié à trois barres de coin (7) ayant trois côtés exorbités auquel barres de coin (7) sont insérés et fixés par des vis insérées dans des trous transversaux (8) des ancres de connexion circulaires (6) dans les bars de coin (7);
c. ancres de connexion circulaires (6) qui résident à l'intérieur aux deux extrémités de barres transversales (7) et des barres transversales sous (15) et ont des trous transversaux (8) et des trous axiaux (31), dont les premiers sont utilisés pour fixer deux extrémités du coin bar (7) ou barre transversale sous (15) à un bloc de coin (1) ou bloc d'extension (16), respectivement;
d. des barres transversales (12) qui possède une section transversale rectangulaire creuse avec une petite fente longitudinale (14) et deux ancrages de liaison circulaires (6) à chaque extrémité pour faciliter la fixation de la barre transversale (12) à une barre d'angle (7), une autre barre transversale (12), sous la barre transversale (15) ou bloc d'extension (16);
e. barres transversales sous (15) qui ont une section transversale rectangulaire creuse avec une petite fente longitudinale et un point d'ancrage de raccordement circulaire (6) à chaque extrémité pour faciliter la fixation d'une barre de sous transversale (15) à une barre d'angle (7), une barre transversale (12), une autre barre transversale sous (15) ou bloc d'extension (16);
f. blocs d'extension (16) qui possède deux faces bombées carrés (23) auquel les barres d'angle (7) peut être insérée et fixée par vissage à travers les trous transversaux (8) des ancrages de liaison circulaires (6) des barres d'angle (7) et
g. inserts en plastique mince (17) placés entre les deux lors de la connexion ou l'autre des barres transversales (12) ou barres transversales sous (15) l'une des barres d'angle (7) ou des blocs d'extension (16) et fixé au moyen de quatre vis pour chaque connexion établie par un barre transversale (12) et au moyen de deux vis pour chaque connexion établie par une barre transversale sous (15)
tous connectés de manière à réaliser une structure de bâti extensible en termes de largeur, la hauteur ou de la profondeur en utilisant des blocs d'extension (16).

2. Structure tridimensionnelle selon la revendication 1, **caractérisé en ce qu'**il comprend plusieurs blocs de coin (1) de laquelle un bloc d'angle (1) est une pièce en cube d'acier avec une longueur d'arête M qui a été coupé et usiné pour avoir trois côtés avec des renflements (4), deux faces planes sans bombement et une face plane mais sans bombement une trou taraudé percé au centre (5) qui sera toujours orientée vers le haut ou vers le bas en fonction de l'emplacement de fixation.

3. Structure tridimensionnelle selon la revendication 2, **caractérisé en ce qu'**il comprend des blocs d'angle (1) avec des renflements (4) où chaque renflement (4) a une forme carrée, légèrement plus petite que la surface sur laquelle il est en saillie à partir de et capable d'être inséré dans la section transversale d'une barre d'angle (7) et qui est situé directement en face d'une face plane qui peuvent ou peuvent ne pas contenir un trou central taraudé (5) et chaque renflement comporte quatre trous taraudés (2), une située à chaque coin de la surface carrée de la bosse (4) avec le centre de chaque trou d'une distance 'm' à partir des bords de la surface de la place du bloc principal convergent pour former un coin du bloc sur lequel le renflement en saillie (4) se trouve.

4. Une structure en trois dimensions selon les revendications 2 et 3, **caractérisé en ce que** chaque renflement (4) sur un bloc de coin (1) contient également un trou libre inexploité (3) avec son centre au point de les diagonales du visage carré d'intersection avec un diamètre pas assez grande pour toucher la circonférence de l'un des quatre trous taraudés (2) sur le renflement (4) et foré dans une profondeur suffisante pour former un passage de liaison creux à l'intérieur du bloc cubique solide avec les trous percés de façon similaire sur les deux autres faces bombées et le trou taraudé (5) du côté de l'avion.

5. Structure tridimensionnelle selon la revendication 1, **caractérisé en ce qu** 'il comprend d'un bloc d'extension (16) qui est un parallélépipède carré solide de métal qui a été percé, coupé et usiné pour former un connecteur qui peut connecter deux barres d'angle (7) ensemble pour obtenir un bord étendu pour structures tridimensionnelles complètes et se compose de deux surfaces carrées avec des renflements (23) avec des trous sur eux et les deux faces planes rectangulaires successives (24) et les deux autres surfaces rectangulaires ont des trous (25) et l'accès découpes (22) où ces surfaces rectangulaires retranchés sont situés juste en face des deux surfaces planes rectangulaires.

6. Structure tridimensionnelle selon la revendication 5, **caractérisé en ce que** le bloc d'extension (16) présente deux renflements carrés (23) seulement sur les deux côtés carrés du bloc (16) plus petite que la surface sur laquelle il est en saillie à partir de et capable de tenir dans à la section transversale creuse d'un bar du coin (7) afin de faciliter l'extension où chaque renflement a quatre trous taraudés, l'un situé dans chaque coin de la surface carrée du renflement carré (23) avec le centre de chaque trou à une m de distance de la bords du bloc solide qui convergent pour former la surface à partir de laquelle fait saillie le renflement.

7. Structure tridimensionnelle selon la revendication 6, **caractérisé en ce qu'**il comporte un bloc d'extension (16) qui a deux côtés consécutifs ayant un trou d'accès (22) découpées dans chacun d'entre eux et de huit trous (25) sur chacun de ceux rectangulaire côtés, et situés dans deux rangées divisées de manière égale une rangée de chaque côté de l'accès découpé avec la ligne reliant les centres des trous sur une rangée particulière parallèle à l'axe longitudinal du bloc et à une distance «m» de la bord du bloc et un trou percé centralement sur toute la longueur du bloc avec son axe parallèle à celui de l'axe longitudinal du bloc et coïncident avec les centres des surfaces carrées du bloc et cette relie les deux sorties accès coupées à créer une cavité creuse avec quatre ouvertures de laquelle deux d'entre eux sont circulaire et qui sont situés au centre sur les renflements avec leurs centres coïncident avec l'axe longitudinal du bloc.

8. Une structure en trois dimensions selon les revendications 3 et 6, **caractérisé en ce que** les barres d'angle (7) forment le cadre extérieur de la structure mentionnée où les barres faites par pliage de plaques d'acier a deux côtés avec un réseau de trous taraudés (9) situées sur les et deux parties planes qui toujours confrontés à l'extérieur de la structure et l'un de ces côtés plans et l'un des deux côtés trouées contiennent deux retraits accès coupées placées stratégiquement (11) à chaque extrémité des barres d'angle (7).

9. Structure tridimensionnelle selon la revendication 8, **caractérisé en ce qu'**il présente une barre d'angle (7) qui possède un réseau de trous taraudés (9) situés dans deux droites par surface sur deux surfaces adjacentes avec les lignes reliant les centres des trous taraudés dans chaque ligne droite parallèle à l'axe longitudinal de la barre creuse (7) et chaque ligne de trous taraudés situés à une certaine distance «m» par rapport aux bords longitudinaux de la face rectangulaire elle est située sur, et les côtés contenant les réseaux de taraudé trous vont se trouver des deux côtés de l'arête non connectée (10) sur toute la longueur de la barre d'angle (7), tandis que les deux autres côtés plans se trouvent directement en face des deux côtés terrés.

10. Une structure en trois dimensions selon la revendication 9, **caractérisé en ce que** le coin bar (7) comprend un total de découpes quatre d'accès (11) où deux découpes d'accès de chaque sont placés sur deux côtés opposés de la barre de coin (7) à chaque extrémité de la barre de coin où les aboutissants accès coupées (11) sont situées sur les surfaces sur lesquelles les ancrages de connexion circulaires (6) sont fixés et situé légèrement en dessous ou au-dessus de la ligne droite horizontale qui relie les centres de deux rivets circulaires (13) qui détiennent une paire de chevilles de raccordement circulaires (6) à une extrémité de la barre de coin (7) rigide en place.

11. Structure tridimensionnelle selon la revendication 1, **caractérisé en ce qu'**il comporte des barres transversales (12) qui forment le fond et ajouter de l'espace et des options à l'intérieur de la structure de montage sont réalisés par pliage d'une tôle d'acier pour former une structure métallique creuse avec une section transversale rectangulaire avec une fente (14) sur un des côtés les plus longs de la section transversale rectangulaire sur toute la longueur de la barre transversale (12), tandis que trois des quatre côtés de la barre transversale (12) présentent des rangées de trous taraudés (9) et les deux parties qui forment les deux côtés les plus courts de la section transversale sont placés stratégiquement outs accès de coupe (11) à chaque extrémité tandis que le côté plan rectangulaire qui ne contient pas les aboutissants accès de coupe (11) et une fente (14) sera toujours face à la extérieur de la structure.

12. Structure tridimensionnelle selon la revendication 11, **caractérisé en ce qu'**il comporte une barre transversale (12) comprenant un réseau de trous taraudés (9) situé dans les lignes droites et les parties qui contiennent le côté le plus court de la section transversale rectangulaire a deux rangées de trous (9), tandis que le troisième côté dispose de quatre lignes avec deux rangées de trous situés de chaque côté de la division centrale (14) sur le côté et à chaque ligne droite qui relie les centres de trous dans une rangée donnée qui court le long de la barre est parallèle à l'axe longitudinal de la barre transversale et d'une distance «m» à partir du bord le plus proche d'un côté de la barre transversale (12), sauf pour les lignes situées plus proche de la scission (14) qui se trouvent à une distance «m» de la ligne centrale de la fente (14) ou un espace qui est parallèle à l'axe longitudinal de la barre transversale (12).

13. Structure tridimensionnelle selon la revendication 12, **caractérisé en ce que** chaque barre transversale (12) comprend un total de découpes quatre d'accès (11) où deux retraits accès de coupe (11) sont chacune placées sur deux côtés opposés de la barre transversale (12) à chaque extrémité des barres transversales (12) où les aboutissants accès coupées (11) sont situées sur les surfaces sur lesquelles les ancrages de connexion circulaires (6) sont fixés, où dans ce cas seront les deux côtés les plus courts de la section rectangulaire et situé légèrement en dessous ou au-dessus de la ligne droite horizontale qui relie les centres de deux rivets circulaires (13) qui détiennent une paire de chevilles de raccordement circulaires (6) à une extrémité de la barre transversale rigide en place et les mots ci-dessus et ci-dessous relativement dépendra de la fin et le côté du bar du coin à l'étude.

14. Structure tridimensionnelle selon l'une quelconque des revendications précédentes, dans lequel la dimension modulaire M ou m est mentionné **caractérisés en ce qu'**ils sont définis comme M = 4 * m, dans lequel la dimension modulaire M est de 50 mm et la dimension modulaire m est 12,5 mm.

15. Utilisation de la construction de trame selon l'une quelconque des revendications 1-13 pour la construction de boîtiers en vue de l'équipement électrique de l'habitation pour les opérations de basse et moyenne tension.
